# EUROPEAN PATENT APPLICATION

(11) **EP 1 676 765 A2**
(43) Date of publication of application: **05.07.2006**
(21) Application number: 05292708.4
(22) Date of filing: 15.12.2005
(51) Int. Cl.: B60T 17/06

(54) **Compressed air supplying apparatus**

(30) Priority: 23.12.2004 KR 2004111450
(71) Applicant: Doosan Infracore Co., Ltd., Dong-gu Incheon 401-020 (KR)
(72) Inventor: Cho, Seung Bae, Incheon 402-070 (KR)
(74) Representative: Loisel, Bertrand

(57) **Abstract**

A compressed air supplying apparatus is provided for, in such vehicles with no air compressor as heavy construction equipments, extracting a portion of compressed air supplied from a turbocharger to an engine to use the extracted air for the purpose of cleaning a vehicle cabin or the like. The apparatus comprises a turbocharger and a bifurcate tube attached to midway of an intake pipe through which the turbocharger supplies compressed air to an intake manifold of an engine. The bifurcate tube is adapted to extract the compressed air from the intake pipe. An air spray device is connected to a distal end of the bifurcate tube so that it can spray the compressed air, if needed, to cleanse a vehicle cabin or other parts of the construction equipments.

## Description

### BACKGROUND OF THE INVENTION

### Field of the Invention

The present invention relates to a compressed air supplying apparatus, particularly to a compressed air supplying apparatus for extracting a portion of compressed air supplied from a turbocharger to an engine so as to use the extracted air for the purpose of blowing off dust or wastes in a vehicle cabin or the like, in such vehicles with no air compressor as heavy construction equipments,

### Description of the Related Art

Heavy construction equipments such as hydraulic excavators or industrial vehicles such as forklift trucks usually work in the dusty environment. In the environment, the dust or earth is often introduced into a vehicle cabin. Once in a while, vehicle operators spray compressed air to various parts of the vehicle so as to blow off the dust or earth thus introduced.

It has been a usual practice that the compressed air is extracted either from an air compressor separately provided for actuating a brake and other devices or an accumulator for storing the compressed air generated by the air compressor.

In recent years, attendant upon the advancement of hydraulics technology, there are many instances that the heavy construction equipments such as hydraulic excavators make use of a hydraulic device, in stead of the air compressor, in order to operate the brake and other actuators.

However, as the air compressor is not provided in hydraulic excavators, the operators must drive the vehicle up to a place where a high pressure cleaner is available in order to clean dusts or other wastes in a cabin. This makes the operators feel inconvenient.

Although such inconvenience may be eliminated by providing a separate air compressor for use of cleaning, this would pose a number of drawbacks in that provision of the air compressor causes to increase production costs and makes the vehicle structurally complicated.

### SUMMARY OF THE INVENTION

To solve the above mentioned problems in the vehicles with no air compressor, such as heavy construction equipments, it is an object of the present invention to provide a compressed air supplying apparatus that can supply compressed air for cleaning dusts, etc. in a vehicle cabin without a separate air compressor.

To accomplish the object, the present invention provides a compressed air supplying apparatus for use in engine-driven vehicles with a turbocharger, comprising a bifurcate tube connected to an intake pipe through which the turbocharger supplies compressed air to an intake manifold of an engine, for extracting the compressed air from the intake pipe, and an air spray device connected to an end of the bifurcate tube.

The air spray device comprises an air gun having an actuator lever that can regulate the amount of the compressed air sprayed. A check valve is provided on the bifurcate tube for permitting the compressed air to flow into the bifurcate tube from the intake pipe but prohibiting air flow in the opposite direction. An accumulator may be further provided on the bifurcate tube between the check valve and the air spray device for accumulating and releasing the compressed air to keep the pressure in the bifurcate tube constant. Furthermore, a shutoff valve may be provided on the bifurcate tube for interrupting flow of the compressed air through the bifurcate tube.

The turbocharger is driven by exhaust gases discharged from the engine. By controlling fuel injection amount in the engine and hence volume of the exhaust gases, it becomes possible to regulate revolution speed of the turbocharger operatively associated therewith, as a result of which the volume of the compressed air discharged into the intake pipe by the turbocharger can be changed properly. To this ends, an air volume regulator device may be additionally provided on the engine for controlling the fuel injection amount in the engine.

Taking it into account that the air extracted through the bifurcate pipe is at an elevated temperature, it may be possible to have the bifurcate tube extend through a cooling device, which is composed of an external low temperature source, so that the air within the bifurcate tube can be cooled down.

### BRIEF DESCRIPTION OF THE DRAWINGS

The above and other objects, features and advantages of the present invention will become apparent from the following description of a preferred embodiment given in conjunction with the accompanying drawings, in which:

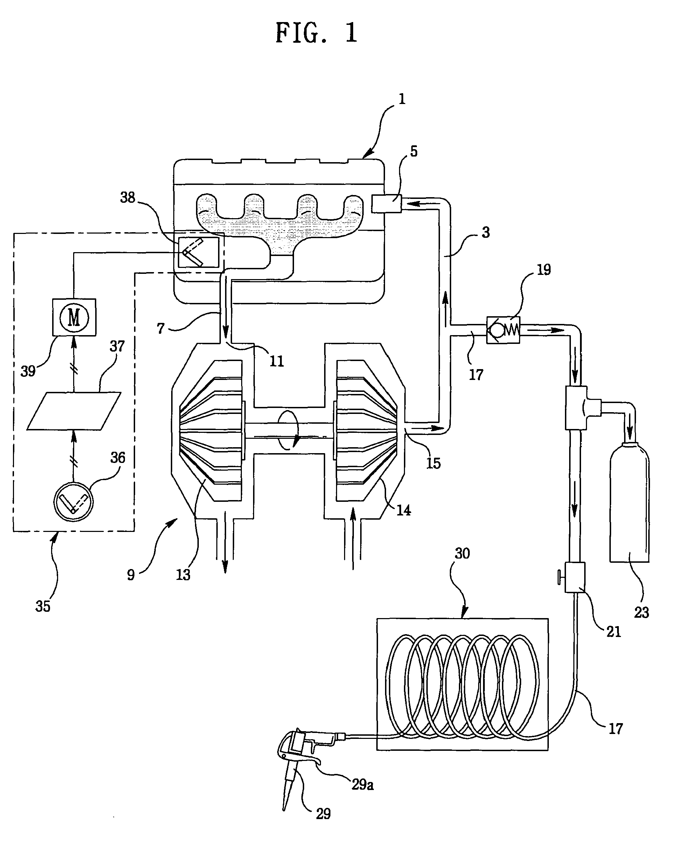

FIG. 1 schematically shows the overall construction of a compressed air supplying apparatus in accordance with the present invention.

### DETAILED DESCRIPTION OF THE INVENTION

Now, a preferred embodiment of a compressed air supplying apparatus according to the present invention will be described in detail with reference to the accompanying drawing.

FIG. 1 schematically shows the overall construction of a compressed air supplying apparatus in accordance with the present invention. As shown in FIG. 1, an engine 1 is provided with an exhaust pipe 7 connected to an inlet port 11 of a turbocharger 9 whose drive impeller 13 is rotated by the stream of exhaust gases discharged from the engine 1. The drive impeller 13 of the turbocharger 9 is directly connected a driven impeller 14 by virtue of a shaft and imparts a rotational force to the driven impeller 14 while rotating by the stream of exhaust gases. As the driven impeller 14 is caused to rotate by the drive impeller 13, the ambient air is introduced into the turbocharger 9 and compressed air of high pressure is discharged through an outlet port 15. The outlet port 15 of the turbocharger 9 is connected to an intake manifold 5 of the engine 1 via an intake pipe 3 in such a fashion that the compressed air discharged from the turbocharger 9 can be supplied to an intake port of the engine 1.

A bifurcate tube 17 is connected to the intake pipe 3 so that it can extract a portion of the compressed air that the turbocharger 9 supplies to the intake port of the engine 1 through the intake pipe 3. Provided on the bifurcate tube 17 is a check valve 19 that prevents backflow of the air extracted from the intake pipe 3.

An air spray device 29 is connected to the distal end of the bifurcate tube 17 and serves to spray the extracted air contained in the bifurcate tube 17 to the outside as an actuator lever 29a is pressed by an operator. In between the check valve 19 and the air spray device 29, a shutoff valve 21 is provided on the bifurcate tube 17 for optionally interrupting or permitting flow of the compressed air toward the air spray device 29. The air spray device 29 may include, but is not particularly limited to, conventional air guns.

An accumulator 23 is provided on the bifurcate tube 17 between the check valve 19 and the air spray device 29 for accumulating and releasing the compressed air to keep the pressure in the bifurcate tube 17 constant. The compressed air of high pressure stored in the accumulator 23 is prohibited from flowing toward the intake pipe 3 by the action of the check valve 19 provided adjacent to the proximal inlet end of the bifurcate tube 17 and can be discharged to the outside through the air spray device 29 only when the shutoff valve 21 disposed in the vicinity of the distal outlet end of the bifurcate tube 17 is opened.

Referring again to FIG. 1, the compressed air supplying apparatus in accordance with the present invention is further provided with an air volume regulator device 35 for changing the volume of the compressed air supplied to the intake manifold 5 of the engine 1 from the turbocharger 9 by controlling the amount of fuel injection in the engine 1. On account of the fact that the turbocharger 9 is rotatingly driven by the exhaust gases discharged from the engine 1 through the exhaust pipe 7, the revolution speed of the turbocharger 9 can be regulated by controlling the amount of fuel injection in the engine 1 and hence the volume of the exhaust gases discharged.

As shown in FIG. 1, the air volume regulator device 35 comprises a fuel injection amount adjustor dial 36, a control part 37 responsive to adjustment signals from the fuel injection amount adjustor dial 36 for issuing electric control signals corresponding to the adjustment signals, and a throttle valve control motor 39 in response to the control signals from the control parts 37 for opening and closing a throttle valve 38 provided in the engine 1.

If the operator wishes to increase the volume of the compressed air, the fuel injection amount adjustor dial 36 is turned to one of air volume increasing positions to thereby feed electric adjustment signals corresponding to the dial position to the control part 37, in response to which the control part 37 issues control signals to the throttle valve control motor 39 to increase the degree of opening of the throttle valve 38. Responsive to the control signals, the throttle valve 38 is opened at a greater degree of opening, which increases the fuel injection amount and eventually the volume of the exhaust gases.

The increase in the exhaust gas volume causes the drive and driven impellers 13, 14 of the turbocharger 9 to rotate faster whereby the volume of the compressed air supplied to the intake manifold 5 through the intake pipe 3 is increased such that an increased amount of the compressed air can be extracted through the bifurcate tube 17 and then sprayed by the air spray device 29.

According to the compressed air supplying apparatus described in the foregoing, the engine 1 discharges exhaust gases through the exhaust pipe 7 during its operation, which exhaust gases impart rotational forces to the turbocharger 9 so that the turbocharger 9 can be rotated to pressurize and supply the ambient air to the intake manifold 5 through the intake pipe 3. A portion of the compressed air flowing through the intake pipe 3 is extracted by the bifurcate tube 17 and then fed to the air spray device 29. In this process, the accumulator 23 attached to midway of the bifurcate tube 17 serves to accumulate and release the compressed air in order to keep the pressure in the bifurcate tube 17 constant.

In order for the operator to cleanse a vehicle cabin with the compressed air, the shutoff valve 21 provided midway of the bifurcate tube 17 should be opened and then the actuator lever 29a of the air spray device 29 should be pressed such that the compressed air can be sprayed into the vehicle cabin.

In the meantime, the bifurcate tube 17 is so provided as to pass through a cooling device 30 such as a radiator plate or the like. This makes it possible to reduce the temperature of the compressed air discharged through the bifurcate tube 17 to a level suitable for the cleaning operation.

As described in the foregoing, the compressed air supplying apparatus according to the present invention provides a beneficial effect in that compressed air for cleaning or other purposes can be produced in hydraulically operated vehicles inclusive of heavy construction equipments through the use of a turbocharger but without resort to a separate air compressor. Even though the compressed air thus produced has a lower pressure than the air generated by a high performance air compressor, it can be conveniently used in a variety of applications, for instance, cleaning a vehicle cabin, actuating pneumatically operated tools and blowing a cool breeze to a vehicle operator.

Although certain preferred embodiments of the present invention have been described in the foregoing, it will be apparent to those skilled in the art that various changes or modifications may be made thereto within the scope of the invention defined by the appended claims.

## Claims

1. A compressed air supplying apparatus for use in engine-driven vehicles with a turbocharger 9, comprising a bifurcate tube 17 connected to an intake pipe 3 through which the turbocharger 9 supplies compressed air to an intake manifold 5 of an engine 1, for extracting the compressed air from the intake pipe 3, and an air spray device 29 connected to the end of the bifurcate tube 17.

2. The apparatus as recited in claim 1, further comprising a check valve 19 provided on the bifurcate tube 17 for permitting flow of the compressed air into the bifurcate tube 17 from the intake pipe 3 but prohibiting air flow in the opposite direction.

3. The apparatus as recited in claim 2, further comprising an accumulator 23 provided on the bifurcate tube 17 between the check valve 19 and the air spray device 29 to keep the pressure in the bifurcate tube 17 constant.

4. The apparatus as recited in claim 1, further comprising a shutoff valve 21 provided on the bifurcate tube 17 for opening or closing the bifurcate tube.

5. The apparatus as recited in claim 1, further comprising an air volume regulator device 35 provided on the engine 1 for regulating a discharge volume of exhaust gases to vary the volume of the compressed air flowing through the intake pipe 3.

6. The apparatus as recited in claim 1, further comprising a cooling device 30 for cooling the compressed air which passing through the bifurcate tube 17.
